**Europäisches Patentamt**

**European Patent Office**

**Office européen des brevets**

(19)

(11) Veröffentlichungsnummer : **0 286 628 B1**

(12)

# EUROPÄISCHE PATENTSCHRIFT

(45) Veröffentlichungstag der Patentschrift :
**08.07.92 Patentblatt 92/28**

(51) Int. Cl.[5] : **F24D 3/00, F24D 11/02, F24D 17/00**

(21) Anmeldenummer : **88890080.0**

(22) Anmeldetag : **28.03.88**

(54) **Verfahren zur Warm- und/oder Heisswasserbereitung und Speicherwasserkraftwerk zur Durchführung des Verfahrens.**

(30) Priorität : **08.04.87 AT 867/87**

(43) Veröffentlichungstag der Anmeldung :
**12.10.88 Patentblatt 88/41**

(45) Bekanntmachung des Hinweises auf die Patenterteilung :
**08.07.92 Patentblatt 92/28**

(84) Benannte Vertragsstaaten :
**CH DE FR IT LI**

(56) Entgegenhaltungen :
**AT-B- 169 487
CH-A- 232 847
DE-A- 2 732 639
US-A- 3 945 218**

(73) Patentinhaber : **ENERAG ENERGY RESOURCES AG
Seestrasse 97
CH-6052 Hergiswil (CH)**

(72) Erfinder : **Der Erfinder hat auf seine Nennung verzichtet**

(74) Vertreter : **Beer, Manfred, Dipl.-Ing. et al
Lindengasse 8
A-1070 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 286 628 B1

## Beschreibung

Die Erfindung betrifft ein Verfahren zur Warm- und/oder Heißwasserbereitung unter Verwendung wenigstens einer Wärmepumpe.

Zur Gewinnung von Wärme aus Wasser ist es bekannt, Wasser-Wasser Wärmepumpen zu verwenden. In der DE-A 28 34 442 wird eine Wärmepumpenanlage beschriebenen, bei der einem Wasserleitungsnetz Wasser entnommen, durch eine Wärmepumpe geführt und wieder in die Leitung zurückgespeist wird. Mangels anderer Hinweise in der DE-A 28 34 442 ist davon auszugehen, daß die Wärmepumpe durch dem öffentlichen Stromversorgungsnetz entnommene, elektrische Energie betrieben wird. Einer Wärmepumpe abgearbeitetes Unterwasser von Wasserkraftwerken zuzuführen und diesem in Wärmepumpen Wärme zu entziehen, ist in der DE-A 28 34 442 nicht angesprochen. Ziel der DE-A 28 34 442 ist es, durch Injektorwirkung die Strömung des Wassers (dem Wärme zu entziehen ist) durch die Wärmepumpe zu erleichtern und dadurch die Pumpe zu entlasten.

Aus der FR-A 2 384 214 ist eine Wärmepumpe bekannt, bei welcher der Verdampfer durch einen Hilfsverdampfer ersetzt sein kann, der beispielweise Brunnenwasser, Flußwasser oder auch Brauchwasser Wärme entzieht. In der FR-A 2 384 214 ist kein Hinweis darauf enthalten, abgearbeitetes Unterwasser von Wasserkraftwerken zu verwenden und die Wärmepumpe durch Strom eben dieses Wasserkraftwerkes zu betreiben.

Die DE-A 29 26 610 befaßt sich lediglich mit der Ausgestaltung eines Speichers zur Bereitstellung von Eingangsenergie auf niedrigem Temperaturniveau für Wärmepumpenanlagen. Dieser Speicher ist ein Wasserbekken, das beispielweise als Schwimmbecken ausgebildet sein kann.

Die EP-A-O 043 067 beschreibt ein Blockheizkraftwerk (kein Wasserkraftwerk), wobei eine Wärmepumpe vorgesehen sein soll. Dem Verdampfer der Wärmepumpe soll die aus einem zu kühlenden Raum in einem Kühlkreislauf aufgenommene Wärme zugeführt werden. Ein Hinweis auf die Benutzung von abgearbeitetem Unterwasser von Wasserkraftwerken als Wärmequelle ist auch der EP-A-O 043 067 nicht als bekannt zu entnehmen.

In der AT-B 169 487 wird eine mehrstufige Wasserkraftanlage beschrieben, wobei keinerlei Hinweise darauf enthalten sind, dem Unterwasser, das gemäß der AT-B 169 487 einer weiteren Turbine zugeführt werden soll, durch eine Wärmepumpe Wärme zu entziehen.

In der CH-A 232 847 ist eine Wärmepumpenanlage beschrieben, bei der einem Gewässer mit Hilfe einer Pumpe Wasser entnommen und zu einer höher als das Gewässer liegenden Wärmepumpe zugeführt wird. Das aus der Wärmepumpe austretende Wasser wird in das Gewässer zurückgeleitet, wobei es eine Turbine antreibt, durch die die Wärmepumpe, unterstützt durch einen Zusatzmotor angetrieben wird.

Bisher wurde auf die Möglichkeit, aus dem Wasser Kraft und Wärme zu gewinnen, verzichtet. Man beschränkte sich auf die Stromerzeugung nach der maximalen Ausbauwassermenge und hatte dann Schwierigkeiten mit dem Absatz von Überschußstrom. Diese Schwierigkeiten führten je nach Eigenbedarf des Besitzers zu volkswirtschaftlich unsinnigen Situationen, da die Werksbetreiber den größten Teil ihrer Erzeugung nur zu geringen Preisen in das öffentliche Netz einliefern konnten.

Der Erfindung liegt die Aufgabe zugrunde, das Unterwasser, insbesondere von Speicher-Wasserkraftwerken, zur Warm- und/oder Heißwasserbereitung mit wenigstens einer Wärmepumpe zu verwerten und so einen Beitrag zur Verkleinerung der umweltschädlichen Emissionen durch Ersatz fos siler Brennstoffe bei der Bereitung von Warm- und/oder Heißwasser ohne Verringerung der benötigten Wärmeenergie zu leisten.

Erfindungsgemäß wird dies durch ein Verfahren zur Warm- und/oder Heißwasserbereitung unter Verwendung wenigstens einer Wärmepumpe erreicht, wobei das einem Wasserbehälter entnommene Wasser zuerst durch eine Turbine eines Wasserkraftwerkes, insbesondere eines Speicherwasserkraftwerkes, und dann durch eine Wärmepumpe, wo die Wärme entzogen wird, und anschließend in ein Gewässer geleitet wird.

Beim erfindungsgemäßen Verfahren wird nicht nur Strom erzeugt, sondern auch die im Unterwasser noch enthaltene Wärmeenergie verwertet. Beim erfindungsgemäßen Verfahren ist damit gegenüber der bisher üblichen reinen Stromgewinnung mindestens eine Verdreifachung der Ausnützung des Energiepotentials "Wasser" zu erreichen. Es wird das Wasser-Wärmekraftwerk geschaffen, wobei die so erzeugte Energie direkt den Letztverbrauchern zugeführt werden kann.

Beispielsweise kann mit dem erfindungsgemäßen Verfahren an kleinen, meist selbständigen Wasserkraftwerken die von den angeschlossenen Wärmekonsumenten benötigte Energie mit Wasser-WasserWärmepumpen gewonnen werden, die beim Konsumenten aufgestellt sind und über ein Versorgungsrohrnetz mit dem abgearbeiteten Unterwasser versorgt werden. Die Wärmepumpen beziehen ihre elektrische Energie über ein mit dem Versorgungsrohrnetz geführtes Leitungsnetz für gewöhnlich vom werkseigenen Turbinen-Generatorsatz.

Die Wärmepumpen erzeugen Warm- und/oder Heißwasser und können beispielsweise in jedes bestehende Zentral- und/oder Fernheizungssystem eingebunden werden. Eine Zusatzheizung ist dabei nicht mehr erforderlich.

Das für das erfindungsgemäße Verfahren benötigte Wasser wird in einem nahegelegenen und wirtschaftlich nicht genutzten Hochtal über den Sommer gespeichert. Die Erfindung macht sich außerdem die physikalische Eigenschaft des Wassers zunutze, indem es jenen Wärmegehalt nützt, der durch Speicherung des Wassers erreicht wird: das im Sommer gespeicherte Wasser kühlt sich auch im Winter normalerweise nicht unter 4°C ab. Falls in den Speicher des Wasserkraftwerkes auch in der kalten Jahreszeit Oberfl chenwasser zuströmt, kann es kurzzeitig zu einer Abkühlung des Wassers im Speicher auf eine Temperatur unter 4°C kommen. In diesem Fall muß je nach Gegebenheit der Zufluß von Wasser in den Speicher unterbunden werden. Dies kann durch Umgehung des Speichers erreicht werden. Durch dieses By-pass-System, das ggf. in eine eigene Druckleitung einspeist, kann eine weitere Turbine angetrieben werden.

Der wesentliche Vorteil des erfindungsgemäßen Verfahrens liegt in der optimalen Nutzung der Wasserenergie:

Speichern im Sommer und Ausnutzung der mechanischen und thermischen Energie im Winter. Je nach Spitzenwärme-bzw. -strombedarf kann aus dem Wasserspeicher mehr oder weniger Wasser entnommen werden. Dies geschieht durch Schließen oder Öffnen der Turbine. Durch das Öffnen bzw. Schließen der Turbine entsteht gleichzeitig jene Strommenge bzw. Leistung, die sich automatisch den jeweils bedarfsmäßigen Mehr- oder Minderwärmeleistungen (Wasserdurchsatz der Wärmepumpen) anpaßt.

Mit diesem Nebeneinander von gleichzeitigen elektrischen und thermischen Leistungsspitzen rückt die Erfindung in eine bisher noch nicht diskutierte Energieverwertungsklasse auf. Darüber hinaus entfällt die Notwendigkeit, den im Sommer gespeicherten Überschußstrom abzunehmen, wodurch sich das Partnerschaftsverhältnis Elektrizitätsversorgungsunternehmen-Kleinkraftwerk wesentlich verbessern läßt. Ganz ohne Überschußstromproduktion wird man auch hier - bei Ausnützung des vorhandenen Wasserangebotes - eine Anlage nicht wirtschaftlich betreiben können. Bei richtiger Auslegung kann eine derartige Gesamtanlage jedoch unter Berücksichtigung des hohen ökonomisch-ökologischen Aufwandes wirtschaftlich optimal genutzt werden.

In einer Variante des Verfahrens wird erfindungsgemäß so vorgegangen, daß man das Wasser höchstens auf eine Temperatur abkühlt, die gleich der Temperatur des Gewässers ist, in welches das Wasser eingeleitet wird.

Die Erfindung bezieht sich auch auf ein Wasserkraftwerk, insbesondere ein Speicherwasserkraftwerk zur Durchführung des erfindungsgemäßen Verfahrens mit wenigstens einer Turbine, der Wasser aus einem Wasserbehälter zugeführt und über wenigstens eine Wärmepumpe an ein Gewässer abgeführt wird. Dieses Wasserkraftwerk ist dadurch gekennzeichnet, daß wenigstens eine an die Turbine(n) des Wasserkraftwerkes unterwasserseitig angeschlossene und zu wenigstens einer Wärmepumpe führende Leitung vorgesehen ist, und daß die Wärmepumpe ggf. unter Zwischenschaltung eines Getriebes mit der Turbine gekuppelt ist.

Vorteilhaft Weiterbildungen des erfindungsgemäßen Verfahrens sind Gegenstand der abhängigen Anprüche 4 und 5.

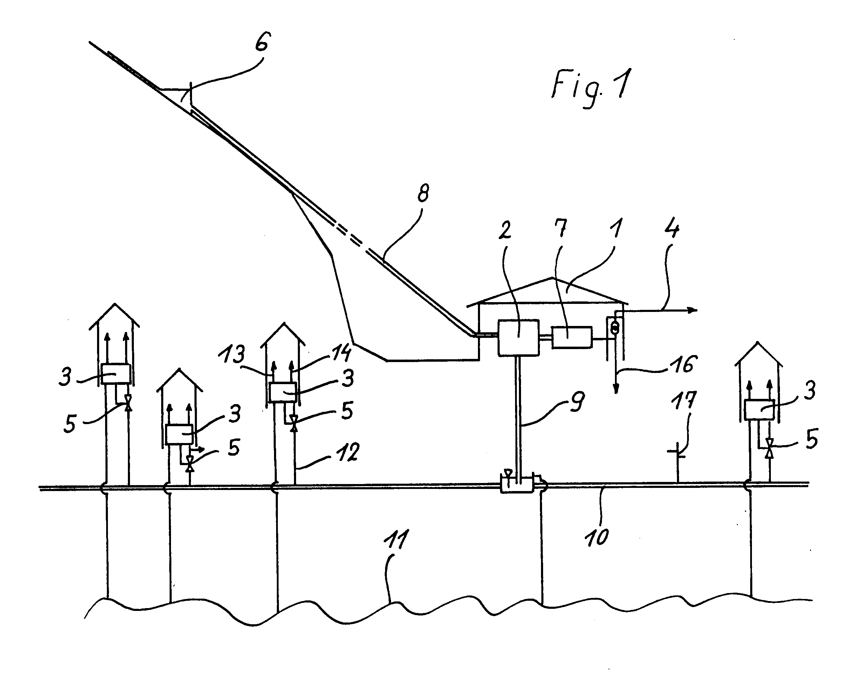

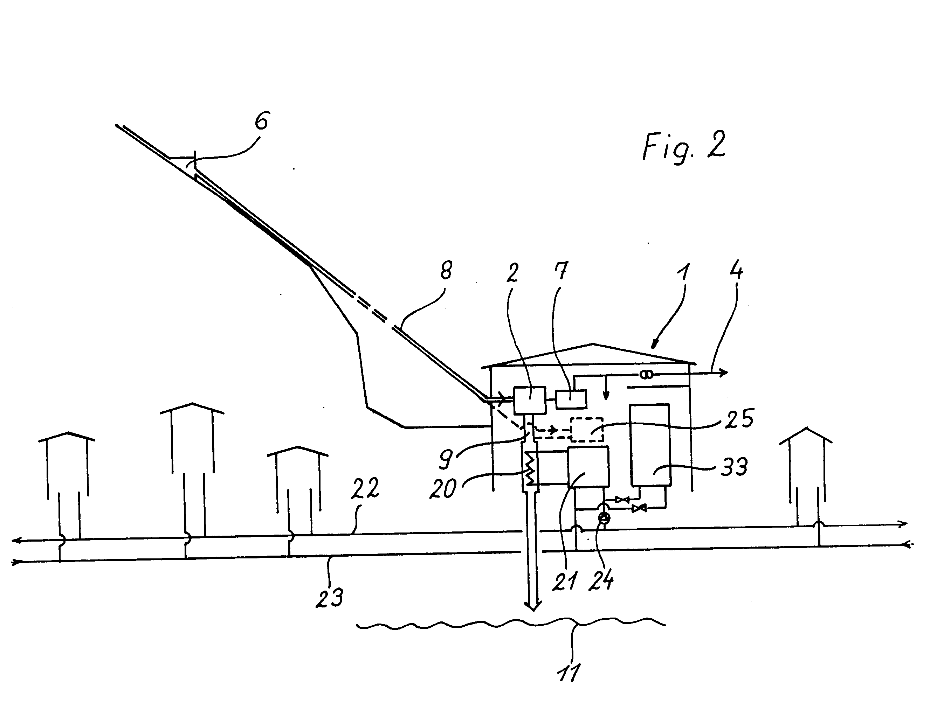

Weitere Einzelheiten und Merkmale der Erfindung ergeben sich aus nachfolgenden Beschreibung, in der auf die angeschlossenen schematischen Zeichnungen Bezug genommen wird. Es zeigt Fig. 1 eine erste Ausführungsform und Fig. 2 eine zweite Ausführungsform mit nur einer Wärmepumpe.

Einem Speicherwasserkraftwerk 1, in dem wenigstens eine mit einem Generator 7 gekuppelte Turbine 2 vorgesehen ist, wird über eine Druckrohrleitung 8 Wasser aus einem Wasserspeicher 6 zugeführt. Bei Betrieb des Kraftwerkes 1 wird der vom Generator 7 erzeugte Strom bzw. Überschußstrom in ein öffentliches Versorgungsnetz 4 eingespeist.

Das aus der Turbine 2 austretende Turbinenunterwasser wird über eine Leitung 9 in ein Rohrleitungssystem 10 eingeleitet. Das Turbinenunterwasser des Kraftwerkes 1 wird also beim erfindungsgemäßen Verfahren nicht unmittelbar in ein Gewässer 11 (Fluß oder Bach) geleitet. Die Leitung 9 kann als (offener) Kanal ausgeführt sein, von dem das Rohrleitungssystem 10 abzweigt. Im Bereich der Abzweigung des Rohrleitungssystems 10 ist im Kanal 9 ein Überlauf vorgesehen, der nicht benötigtes Turbinenunterwasser in das Gewässer 11 leitet.

Über, vom Rohrleitungssystem 10 ausgehende, zu Häusern führende Leitungen 12 wird bei der in Fig. 1 gezeigten Ausführungsform des Turbinenunterwasser aus dem Kraftwerk 1 den bei den Wärmeverbrauchern installierten Wärmepumpen 3 zugeführt, die dem Wasser Wärme entziehen und Warmwasser und/oder Heißwasser erzeugen. Dieses wird dann über Leitungen 13 bzw. 14, die von der Wärmepumpe 3 ausgehen, einem Heiß- und Warmwassersystem eingespeist. Die Menge an Turbinenunterwasser, das durch die Wärmepumpe 3 geführt wird, wird durch Ventile und/oder Pumpen geregelt. Wo diese Ventile und/oder Pumpen im Rohrleitungssystem 10, 12 für das Turbinenunterwasser vorgesehen sind, ist für die Erfindung nicht wesentlich und richtet sich z. B. nach den örtlichen Gegebenheiten. Beim Ausführungsbeispiel von Fig. 1 sind die Ventile 5 in den Leitungen 12, die vom Rohrleitungssystem 10 zu den Wärmepumpen 3 führen, vorgesehen. Jedes Ventil 5 steuert in Abhängigkeit von der gewünschten Wärmemenge bzw. Temperatur die Menge des der Wärmepumpe 3 zugeführten Turbinenunterwassers. Anstelle oder zusätzlich zum Ventil 5 können auch Pumpen vorgesehen sein, die der Wärmepumpe 3 Turbinenunterwasser mit dem gewünschten Druck zuführen (Unter- oder Überdrucksystem).

Nachdem dem Turbinenunterwasser in der Wärmepumpe 3 Wärme entzogen worden ist, wird dieses über Leitungen 15 als Rückgabewasser in das Gewässer 11 eingeleitet. Dabei wird darauf geachtet, daß dem Unterwasser in den Wärmepumpen 3 nur so viel Wärme entzogen wird, daß das in das Gewässer 11 eingeleitete Unterwasser nicht kälter ist als das Wasser im Gewässer 11.

Die zum Betrieb der Wärmepumpen 3 benötigte elektrische Energie kann dem öffentlichen Stromversorgungsnetz 4 entnommen werden. Bei dem in Fig. 1 gezeigten Ausführungsbeispiel wird den Wärmepumpen 3 über ein mit den Rohrleitungssystemen 10, 12 mitgeführtes Stromversorgungsnetz 16 vom Generator 7 erzeugter Strom zugeführt.

Die beschriebene Anlage zur Wärme- und Stromgewinnung hat den zusätzlich Vorteil, daß gleichzeitig ein Wassernetz (Rohrleitungssystem 10) geschaffen wird, dem z.Bsp. über Hydranten 17 bei Bedarf Brauchwasser entnommen werden kann.

In einer nicht gezeigten Ausführungsform kann die Anlage so ausgestaltet sein, daß die Wärmepumpen 3 vom Turbinenunterwasser nicht mittelbar durchflossen sind. In diesem Fall strömt das Turbinenunterwasser durch einen innerhalb der Hausanschlußleitungen 12 liegenden Wärmetauscher, in dem es Wärme an ein Wärmeübertragungsmedium eines geschlossenen Kreislaufes abgibt. Diesem Zwischenwärmetrger wird dann durch die Wärmepumpe 3, die dann eine sogenannte Solewärmepumpe ist, Wärme entzogen.

Bei der in Fig. 2 gezeigten Ausführungsform ist im Speicherwasserkraftwerk eine Turbine 2 vorgesehen, der über eine Druckrohrleitung 8 Wasser aus einem Wasserspeicher 6 zugeführt wird. Die Turbine 2 treibt einen Generator 7 an, der Strom in ein öffentliches Versorgungsnetz 4 einspeist.

Das aus der Turbine 2 austretende (abgearbeitete) Turbinenunterwasser tritt durch einen Wärmetauscher 20 und gibt dort Wärme an einen Solekreislauf ab, der mit einer Wärmepumpe 21 industrieller Größe verbunden ist. Der Solekreislauf über den Wärmetauscher 20 kann gegebenenfalls entfallen. In diesem Fall wird das Turbinenunterwasser der Wärmepumpe 21 unmittelbar zugeführt. Die dem Turbinenunterwasser durch die Wärmepumpe 21 entzogene Wärme wird in den Vorlauf 22 eines Fernheizleitungsnetzes eingespeist und verschiedenen Verbrauchern zugeführt. Der Rücklauf 23 führt wieder zum Kraftwerk 1 zurück. Zur Umwälzung des Wärmeübertragungsmediums im Fernheizleitungsnetz 22, 23 ist wenigstens eine Umwälzpumpe 24 vorgesehen.

In den Fernwärmekreislauf 22, 23 ist noch ein Tageswärmespeicher 33 integriert, der zur kurzfristigen Speicherung von Wärme dient.

Bei einer in Fig. 2 strichliert angedeuteten Ausführungsform ist die einzige Wärmepumpe 21 vorgesehen, die von einer direkt gekoppelten Turbine 25 angetrieben wird. Es ist dies eine gesonderte Turbine 25, die entsprechend den Anforderungen der Wärmepumpe gesteuert werden kann. Diese Variante hat den Vorteil, daß die Anlage durch die direkte Kupplung wirtschaftlicher, d. h. mit kleineren energetischen Verlusten, arbeitet.

Die Ausführungsformen der Fig. 1 und 2 können auch kombiniert verwirklicht werden.

## Patentansprüche

1. Verfahren zur Warm- und/oder Heißwasserbereitung unter Verwendung wenigstens einer Wärmepumpe (3, 21), wobei das einem Wasserbehälter (6) entnommene Wasser zuerst durch eine Turbine eines Wasserkraftwerkes (1), insbesondere eines Speicherwasserkraftwerkes, und dann durch eine Wärmepumpe, wo die Wärme entzogen wird, und anschließend in ein Gewässer (11) geleitet wird.

2. Verfahren nach Anspruch 1, dadurch gekennzeichnet, daß man das Wasser höchstens auf eine Temperatur abkühlt, die gleich der Temperatur des Gewässers (11) ist, in welches das Wasser eingeleitet wird.

3. Wasserkraftwerk (1), insbesondere Speicherwasserkraftwerk, zur Durchführung des Verfahrens nach Anspruch 1 oder 2 mit wenigstens einer Turbine (2), der Wasser aus einem Wasserbehälter (6) zugeführt und über wenigstens eine Wärmepumpe an ein Gewässer (11) abgeführt wird, dadurch gekennzeichnet, daß wenigstens eine an die Turbine(n) (2) des Wasserkraftwerkes (1) unterwasserseitig angeschlossene und zu der Wärmepumpe (3, 21) führende Leitung (9, 10, 12) vorgesehen ist, und daß die Wärmepumpe ggf. unter Zwischenschaltung eines Getriebes mit der Turbine gekuppelt ist.

4. Wasserkraftwerk nach Anspruch 3, dadurch gekennzeichnet, daß die Wärmepumpe (21) die Wärmeenergie in ein Fernwärmenetz (22, 23) einspeist.

5. Wasserkraftwerk nach Anspruch 3 oder 4, dadurch gekennzeichnet, daß die Leitung (9) für das Wasser mit der Wärmepumpe (21) über einen Wärmeaustauscher (20) gekuppelt ist.

## Claims

1. A method of providing heating and/or hot water using at least one heat pump (3, 21), wherein the water taken from a water reservoir (6) is firstly passed through a turbine of a hydroelectric power station (1), especially a pumped storage hydroelectric power station, and then through a heat pump, where the heat is extracted, and is finally fed into a pool (11).

2. A method according to claim 1, characterized in that the water is cooled at most to a temperature equal to the temperature of the pool (11) into which the water is fed.

3. A hydroelectric power station, especially a pumped storage hydroelectric power station, for carrying out the method according to claim 1 or 2, with at least one turbine (2) to which the water from a water reservoir (6) is fed and through at least one heat pump to a pool (11), characterized in that at least one conduit (9, 10, 12) is provided for the turbine or turbines (2) of the hydroelectric power station (1), connected thereto on the underwater side and leading to the heat pump (3, 21), and in that the heat pump is coupled to the turbine, if desired with interposition of a gearbox.

4. A hydroelectric power station according to claim 3, characterized in that the heat pump (21) feeds the heat energy into a heat distribution grid (22, 23).

5. A hydroelectric power station according to claim 3 or 4, characterized in that the conduit (9) for the water is connected to the heat pump (21) through a heat exchanger (20).

## Revendications

1. Procédé de préparation d'eau chaude et/ou d'eau chaude sanitaire utilisant au moins une pompe à chaleur (3, 21), dans lequel on fait passer l'eau provenant d'un réservoir d'eau (6) dans une turbine d'une centrale hydro-électrique (1), notamment d'une centrale hydroélectrique à retenue, puis dans une pompe à chaleur dans laquelle on prélève la chaleur et on rejette enfin l'eau dans un cours d'eau (11).

2. Procédé selon la revendication 1, caractérisé en ce qu'on refroidit l'eau au maximum jusqu'à une température qui est égale à la température du cours d'eau (11) dans lequel on rejette l'eau.

3. Centrale hydro-électrique (1), notamment centrale hydroélectrique à retenue, pour la mise en oeuvre du procédé selon la revendication 1 ou 2 comportant au moins une turbine (2) à laquelle on amène de l'eau provenant d'un réservoir d'eau (6) et on la rejette dans un cours d'eau en la faisant passer par au moins une pompe à chaleur, caractérisé en ce qu'il est prévu au moins une conduite (9, 10, 12) qui est raccordée à la (aux) turbine(s) (2) de la centrale hydro-électrique (1) en aval de celle(s)-ci et mène à la pompe à chaleur (3, 21) et en ce que la pompe à chaleur est couplée à la turbine, éventuellement avec interposition d'un mécanisme réducteur.

4. Centrale hydro-électrique selon la revendication 3, caractérisée en que la pompe à chaleur (21) fournit l'énergie calorifique à un réseau de chauffage urbain (22, 23).

5. Centrale hydro-électrique selon la revendication 3 ou 4, caractérisée en que la conduite (9) pour l'eau est couplée à la pompe à chaleur (21) par l'intermédiaire d'un échangeur de chaleur (20)

Fig. 1

Fig. 2

EP 0 286 628 B1